# EUROPÄISCHE PATENTANMELDUNG

(11) **EP 1 250 952 A1**
(43) Veröffentlichungstag der Anmeldung: **23.10.2002**
(21) Anmeldenummer: 01109570.0
(22) Anmeldetag: 18.04.2001
(51) Int. Cl.: B01J 23/58, B01J 23/63, B01J 23/656, B01D 53/94, F01N 3/023

(54) **Katalysator sowie Filter und Verfahren zur Beseitigung von Russpartikeln aus dem Abgas eines Dieselmotors**

(71) Anmelder: OMG AG & Co. KG, 63457 Hanau (DE)
(72) Erfinder: Pfeifer, Marcus, Dr., 42719 Solingen (DE); Staab, Roger, 63579 Freigericht (DE); Hoffmann, Michael, Dr., 63741 Aschaffenburg (DE); Gieshoff, Jürgen, Dr., 63599 Biebergemünd (DE); Hackbarth, Ulrich, 67133 Maxdorf (DE); Lox, Egbert, Dr., 63403 Hanau (DE); Kreuzer, Thomas, Dr., 61184 Karben (DE)
(74) Vertreter: Herrmann, Reinhard

(57) **Zusammenfassung**

Die Erfindung betrifft einen Katalysator sowie ein Filter und ein Verfahren zur Beseitigung von Rußpartikeln aus dem Abgas eines Dieselmotors. Mittels des Katalysators erfolgt eine Herabsetzung der Zündtemperatur von aus dem Abgas von Dieselmotoren ausgefilterten Rußpartikeln. Der Katalysator enthält als aktive Substanzen jeweils mindestens eine Erdalkalimetallverbindung, eine Sauerstoff speichernde Substanz und eine der Platingruppenmetalle Platin, Palladium oder Rhodium.

## Beschreibung

Die Erfindung betrifft einen Katalysator sowie ein Filter und ein Verfahren zur Beseitigung von Rußpartikeln aus dem Abgas eines Dieselmotors.

Dieselmotoren emittieren neben den auch von Ottomotoren ausgestoßenen Schadstoffen, wie zum Beispiel Kohlenwasserstoffen, Stickoxiden und Kohlenmonoxid, bedingt durch ihre Betriebsweise auch Rußteilchen sowie feinste Kondensattröpfchen oder ein Konglomerat von beiden. Diese Schadstoffe sind im folgenden unter dem Begriff Rußpartikel zusammengefaßt.

Der Reduktion des Ausstoßes von derartigen Rußpartikeln im Abgas von Dieselmotoren ist seit mehreren Jahren von allgemeinem Interesse, insbesondere auch im Hinblick darauf, daß Rußpartikel als gesundheitsschädlich und insbesondere krebserregend erkannt worden sind.

Um diesem Problem zu begegnen werden seit einiger Zeit Filter zur Filterung von Rußpartikeln aus dem Abgas von Dieselmotoren eingesetzt. Beispielsweise werden zur Beseitigung von Rußpartikeln Filter von der Firma Peugeot-Citroën PSA serienmäßig in Fahrzeugen des Typs 607 HDI eingesetzt.

Derartige Filter sind typischerweise von Wandflußfiltern gebildet. Diese Filter weisen Abscheidegrade von über 95 % auf, so daß eine effiziente Filtration von Rußpartikeln gewährleistet ist.

Ein wesentliches Problem bei derartigen Filtern besteht jedoch darin, daß deren Wirkungsgrad im Laufe der Zeit durch die fortlaufende Ablagerung von Rußpartikeln an deren Oberflächen kontinuierlich verringert wird.

Um eine einwandfreie Funktion der Filter aufrecht zu erhalten ist daher eine Regeneration dieser Filter notwendig. Die Regeneration eines Filters erfolgt dadurch, daß die an dessen Oberfläche abgelagerten Rußpartikel mit Hilfe des im Abgas vorhandenen Sauerstoffs verbrannt werden. Hierzu werden Temperaturen im Bereich zwischen 550 °C und 600 °C benötigt. Derartig hohe Temperaturen treten im Abgas eines Dieselmotors nur dann auf, wenn dieser im Volllastbereich betrieben wird. Eine Regeneration von Filtern bei niedriger Last eines Dieselmotors ist daher nicht möglich.

Zur Lösung dieses Problems kann prinzipiell die Abgastemperatur eines Dieselmotors erhöht werden. Dies kann beispielsweise dadurch erreicht werden, daß das im Dieselmotor gebildete Luft/Kraftstoff-Gemisch angefettet wird. Eine Variante dieses Verfahrens ist eine Nacheinspritzung von Kraftstoff in den Dieselmotor. Dabei gelangen unverbrannte Kohlenwasserstoffe und Kohlenmonoxid in das Abgas. Dieses Abgas wird einem dem Filter vorgeordneten Oxidationskatalysator zugeführt, in welchem die Kohlenwasserstoffe und das Kohlenmonoxid oxidiert werden. Die bei dieser katalytischen Verbrennung freiwerdende Energie wird dem Filter zu dessen Aufheizung zugeführt.

Weiterhin kann die Abgastemperatur eines Dieselmotors dadurch erhöht werden, daß das Abgas direkt aufgeheizt wird. Hierzu können Dieselbrenner oder Heizelemente wie Glühstifte oder Mikrowellenheizungen eingesetzt werden. Jedoch ist auch hiermit eine unerwünschte Erhöhung des Kraftstoffverbrauchs verbunden. Zudem ist der Energiebedarf für derartige Heizeinrichtungen unerwünscht hoch.

Zur Vermeidung einer Erhöhung des Kraftstoffverbrauchs bei der Regeneration von Filtern kann die zur Verbrennung der Rußpartikel benötigte Energie herabgesenkt werden. Hierzu werden Katalysatoren eingesetzt, die die Zündtemperatur der Rußpartikel auf dem Filter herabsetzen.

Zur Regeneration der in den Fahrzeugen 607 HDI der Firma Peugeot-Citroën eingesetzten Filter werden derartige Katalysatoren dem Kraftstoff als Additive beigemischt. Typischerweise werden hierbei als Katalysatoren Cer- oder Eisenverbindungen verwendet. Die im Kraftstoff gelösten Additive werden bei der Verbrennung des Kraftstoffes im Brennraum mit diesem umgesetzt. Bei der Verbrennung entstehen aus den Cer- oder Eisenverbindungen entsprechende Metallcluster an welchen sich die Rußpartikel anlagern. Dadurch ist ein guter Kontakt der katalytisch wirksamen Cer- oder Eisenoxide mit den Rußpartikeln gewährleistet, wodurch eine Herabsetzung der Zündtemperaturen der Rußpartikel von bis zu 50 °C erreicht wird.

Eine derartige Herabsetzung der Zündtemperatur ist jedoch nicht ausreichend um eine Verbrennung der Rußpartikel ohne gleichzeitige Erhöhung des Kraftstoffbedarfes zu gewährleisten.

Alternativ oder zusätzlich werden daher katalytische Beschichtungen auf die Filter selbst aufgebracht.

In der DE 31 41 713 A1 sowie in der DE 32 32 739 C2 werden Beschichtungen vorgeschlagen, welche als katalytisch aktive Substanzen Vanadin-Verbindungen enthalten. Als Beispiele sind insbesondere Vanadinpentoxid und Silbervanadat genannt.

Besonders große Absenkungen der Zündtemperaturen von Rußpartikeln werden mit Vanadinverbindungen erhalten, die unter dem Begriff "molten salts" zusammengefaßt werden. Bei derartigen Verbindungen bildet das Vanadin mit einer weiteren Komponente, welche beispielsweise von einem Alkalimetallchlorid gebildet ist, ein niedrigschmelzendes Eutektikum, wobei der Schmelzpunkt des Eutektikums unterhalb der Zündtemperatur der Rußpartikel liegen kann. Bei Abbrennen der Rußpartikel liegt dann dieses Eutektikum in flüssigem Zustand vor. Aufgrund dessen wird ein sehr guter Kontakt zwischen dem Katalysatormaterial und den Rußpartikeln erhalten, wodurch eine große Herabsetzung der Zündtemperatur erhalten wird.

Nachteilig bei derartigen Filterbeschichtungen ist deren mangelhafte Beständigkeit, da sich die verflüssigte Katalysatorschicht verstärkt von dem Filter ablöst. Insbesondere bei auftretenden Kurzzeitbelastungen bei spontanen Filterregenerationen, bei welchen die Temperaturen im Bereich des Filters auf bis zu 1000 °C ansteigen können, tritt eine Sublimation des Filtermaterials auf und damit verbunden ein unerwünschter Verlust an Katalysatormasse.

Aus der US 5,100,632 ist ein Filter zur Beseitigung von Rußpartikeln bekannt, welcher eine katalytische Beschichtung aufweist, die aus einer Mischung aus einem Erdalkalimetalloxid sowie aus Platin und/oder Rhodium besteht. Als besonders bevorzugtes Erdalkalimetalloxid wird Magnesiumoxid vorgeschlagen.

Der Erfindung liegt die Aufgabe zugrunde die Zündtemperatur von aus den Abgasen eines Dieselmotors gefilterten Rußpartikeln möglichst weit herabzusenken.

Zur Lösung dieser Aufgabe sind die Merkmale der Ansprüche 1, 5 und 12 vorgesehen. Vorteilhafte Ausführungsformen und zweckmäßige Weiterbildungen der Erfindung sind in den Unteransprüchen beschrieben.

Erfindungsgemäß wird zur Herabsetzung der Zündtemperatur von aus dem Abgas eines Dieselmotors herausgefilterten Rußpartikeln ein Katalysator eingesetzt, welcher als aktive Substanzen jeweils wenigstens eine Erdalkalimetallverbindung, eine Sauerstoff speichernde Substanz und eines der Platingruppenmetalle Platin, Palladium oder Rhodium enthält.

Mit dem erfindungsgemäßen Katalysator wird eine Herabsetzung der Zündtemperatur von Dieselpartikeln von 100 °C bis 120 °C erhalten.

Dabei wird besonders bevorzugt als Platingruppenmetall Platin als KatalysatorSubstanz verwendet. Als Sauerstoff speichernde Komponenten eignen sich Ceroxid, Cer/Zirkon-Mischoxid, Manganoxid, Eisenoxid, Kupferoxid, Bleioxid, Zinkoxid, Lanthanoxid, Bismutoxid, Nb₂O₅, Ta₂O₅ oder Mischungen hiervon. Bevorzugt werden Manganoxid und Ceroxid eingesetzt, wobei eine Mischung beider Komponenten besonders bevorzugt verwendet wird. Als Erdalkalimetallverbindungen eignen sich insbesondere Calciumverbindungen, vorzugsweise Calciumoxid.

Überraschenderweise ist die Herabsetzung der Zündtemperatur der Rußpartikel bei einer Verwendung eines Gemisches aus jeweils wenigstens einer Sauerstoff speichernden Substanz, einer Erdalkalimetallverbindung und einem Platinmetallgruppenmetall als Katalysator-Substanzen erheblich größer als bei einem Katalysator, der als aktiver Substanzen neben einem Platingruppenmetall nur eine Sauerstoff speichernde Substanz oder eine Erdalkaliverbindung enthält.

Bei dem erfindungsgemäßen Katalysator wird damit ein Synergieeffekt der einzelnen aktiven Substanzen erhalten, der zu einer deutlich verstärkten Herabsetzung der Zündtemperatur der Rußpartikel führt.

Erfindungsgemäß wird dieser Katalysator als Beschichtung in Filtern zur Beseitigung von Rußpartikeln aus dem Abgas von Dieselmotoren eingesetzt.

Besonders bevorzugt werden als Filter Wandflußfilter eingesetzt, die aus einer Anordnung von Anströmkanälen und Abströmkanälen bestehen. Die katalytische Beschichtung ist dabei auf die Innenwände der Anströmkanäle aufgebracht, wobei vorzugsweise die gesamten Oberflächen der Anströmkanäle mit dem Katalysator beschichtet sind.

Aufgrund der mit dem Katalysator erzielten hohen Herabsetzung der Zündtemperatur der Rußpartikel ist der Energieaufwand zur Regeneration des erfindungsgemäßen Filters entsprechend gering.

Die Regeneration des Filters erfolgt durch Verbrennen der am Filter abgelagerten Rußpartikel bei der jeweiligen Zündtemperatur der Rußpartikel.

Dabei erfolgt die Regeneration vorzugsweise in vorgegebenen Zeitintervallen, in welchen die Abgastemperatur des Dieselmotors auf die Zündtemperatur der Rußpartikel angehoben wird.

Hierzu wird ein Oxidationskatalysator eingesetzt, wobei die freiwerdende Wärmeenergie, die bei in dem Oxidationskatalysator ablaufenden Oxidationsprozessen frei wird, zur Aufheizung des Abgases und des Filters verwendet wird. Vorzugsweise werden während der Regeneration des Filters durch eine Nacheinspritzung im Dieselmotor verstärkt unverbrannte Kohlenwasserstoffe und Kohlenmonoxid im Abgas erzeugt, welche im Oxidationskatalysator oxidiert werden.

Der dabei entstehende Kraftstoffmehrverbrauch ist äußerst gering. Auch ist der Energieaufwand für die Aufheizung des Filters aufgrund der geringen Zündtemperatur der Rußpartikel gering.

Die Erfindung wird im Folgenden anhand von Ausführungsbeispielen und anhand der Zeichnungen erläutert. Es zeigen:
- Figur 1:: Schematische Darstellung eines Filters zur Beseitigung von Rußpartikeln aus dem Abgas eines Dieselmotors.
- Figur 2:: Im Abgasstrom des Dieselmotors angeordnetes Filter gemäß Figur 1 sowie ein diesem vorgeordneter Oxidationskatalysator.

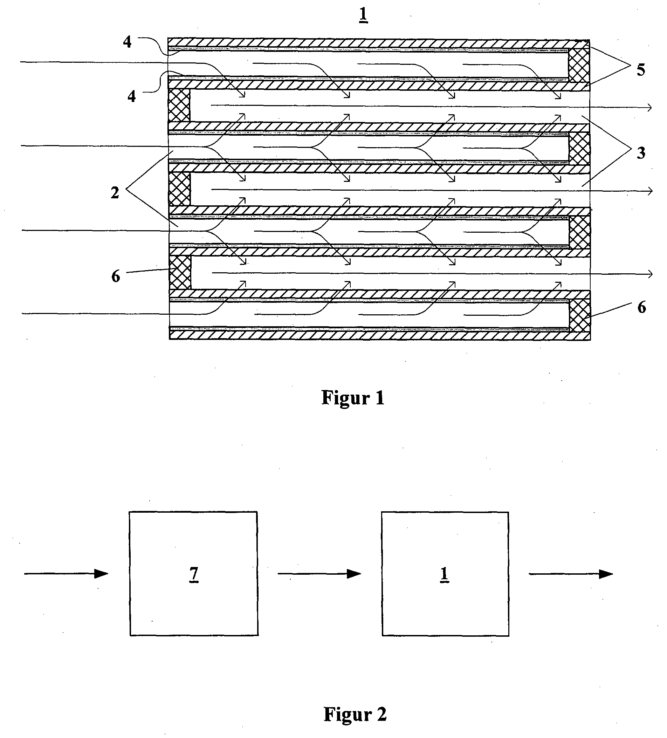

Figur 1 zeigt ein Filter zur Beseitigung von Rußpartikeln aus dem Abgas eines Dieselmotors. Im vorliegenden Ausführungsbeispiel ist das Filter von einem Wandflußfilter 1 gebildet, welches eine Mehrfachanordnung von identisch ausgebildeten und alternierend angeordneten Anströmkanälen 2 und Abströmkanälen 3 aufweist, die durch poröse Kanalwände 5 voneinander getrennt sind. Die Anströmkanäle und Abströmkanäle sind jeweils an einem Ende mit einem Verschluß 6 wechselseitig dicht verschlossen.

Das Filter besteht vorzugsweise aus Siliciumcarbid, Cordierit oder Natriumzirkonphosphat.

Das Abgas wird in die Anströmkanäle 2 des Wandflußfilters 1 eingeleitet. Deren Kanalwände sind porös, so daß das Abgas durch diese in die parallel zu den Anströmkanälen 2 verlaufenden Abströmkanäle 3 gelangt. Das Abgas wird schließlich über die Ausgänge der Abströmkanäle 3 aus dem Filter geführt. Die Strömungsrichtung des Abgases ist in Figur 1 mit Pfeilen schematisch dargestellt.

Die gesamten Innenwände der Anströmkanäle 2 sind mit einer katalytischen Beschichtung 4 versehen. Der die Beschichtung bildende Katalysator weist als aktive Substanzen jeweils wenigstens eine Erdalkalimetallverbindung, eine Sauerstoff speichernde Substanz und wenigstens eines der Platingruppenmetalle Platin, Palladium oder Rhodium auf. Der Katalysator senkt die Zündtemperatur der auf dem Filter abgelagerten Rußpartikel, so daß der Energieaufwand zur Regeneration des Filters reduziert ist.

Im Normalbetrieb des Wandflußfilters 1 werden die im Abgas des Dieselmotors enthaltenen Rußpartikel bei Durchströmen der porösen Wände kontinuierlich am Filter abgeschieden. Um ein Verstopfen des Filters zu vermeiden erfolgt in vorgegebenen Zeitintervallen eine Regeneration des Filters, in dem die abgelagerten Rußpartikel verbrannt werden.

Hierzu wird das Filter und damit auch das Abgas im Bereich des Filters auf die Zündtemperatur der Rußpartikel aufgeheizt. Zur Aufheizung der Rußpartikel ist, wie in Figur 2 dargestellt, dem Wandflußfilter 1 ein Oxidationskatalysator 7 vorgeordnet. Der Abgasstrom ist in Figur 2 wiederum mit Pfeilen gekennzeichnet.

Diesem Oxidationskatalysator 7 werden während der Regenerationszeitintervalle verstärkt unverbrannte Kohlenwasserstoffe und Kohlenmonoxid im Abgas zugeführt. Diese werden im Oxidationskatalysator 7 in einer exothermen Reaktion oxidiert. Die dabei freiwerdende Wärmeenergie wird zur Aufheizung des Filters auf die Zündtemperatur der Rußpartikel verwendet.

Zweckmäßigerweise erfolgt während der Regenerationszeitintervalle eine sogenannte In-Zylinder-Nacheinspritzung im Dieselmotor. Der bei dieser Nacheinspritzung dem Dieselmotor zugeführte Kraftstoff wird nur unvollständig verbrannt, so daß dementsprechend im Abgas vermehrt Kohlenmonoxid und unverbrannte Kohlenwasserstoffe vorhanden sind, welche dem Oxidationskatalysator 7 zugeführt werden.

Der erfindungsgemäße Katalysator zur Herabsetzung der Zündtemperatur weist als aktive Substanzen neben wenigstens einem Platingruppenmetall und einer Erdalkalimetallverbindung auch eine Sauerstoff speichernde Komponente auf.

Als Sauerstoff speichernde Komponenten eignen sich insbesondere Ceroxid, Manganoxid, Eisenoxid, Cer-/Zirkon-Mischoxide oder Mischungen hiervon.

Derartige Sauerstoff speichernde Komponenten sind in der DE 197 14 707 A1 beschrieben. Dort ist die Verwendung von Sauerstoff speichernden Komponenten für die Herstellung von Dreiwegekatalysatoren beschrieben, welche zur Abgasreinigung von Verbrennungsmaschinen eingesetzt werden.

Die Sauerstoff speichernden Komponenten werden gemäß der DE 197 14 707 A1 speziell zur besseren Umsetzung von oxidierbaren Schadstoffkomponenten wie zum Beispiel Kohlenmonoxid eingesetzt. Beispielsweise wird Ceroxid eingesetzt, welches Sauerstoff durch Änderung des Oxidationszustandes von Ce³⁺ nach Ce⁴⁺ bindet, solange Sauerstoff im Überschuss vorhanden ist. Liegt dagegen Sauerstoff im Unterschuss vor, so gibt das Ceroxid durch eine Umsetzung von Ce³⁺ nach Ce⁴⁺ den Sauerstoff wieder ab.

Die in der DE 197 14 707 A1 beschriebenen Sauerstoff speichernden Materialien, insbesondere Ceroxid mit Beimischungen von Stabilisatoren aus der Gruppe Praseodymoxid, Lanthanoxid, Yttriumoxid und Neodymoxid, weisen eine besonders hohe Temperaturstabilität auf und sind insbesondere auch bei Abgastemperaturen von bis zu 1100 °C einsetzbar.

Die Sauerstoff speichernde Funktion derartiger Substanzen, insbesondere die Freisetzung von Sauerstoff in einer Abgasumgebung, in welcher Sauerstoffunterschuss herrscht führt überraschend in Verbindung mit den weiteren Komponenten des erfindungsgemäßen Katalysators zu einer signifikant erhöhten Herabsetzung der Zündtemperatur von Rußpartikeln.

Der erfindungsgemäße Katalysator enthält als bevorzugtes Platingruppenmetall Platin.

Als bevorzugte Erdalkaliverbindungen enthält der erfindungsgemäße Katalysator Calciumverbindungen. Besonders bevorzugt werden als Calciumverbindungen Carbonate, Oxalate, Hydroxide, Carboxylate, Oxide oder Mischungen hiervon verwendet.

Die Konzentration der katalytischen Beschichtung des Filters liegt vorzugsweise im Bereich von 20 bis 150 g/l Filterkörper. Die Konzentration des im Katalysator verwendeten Platingruppenmetalls oder der Platingruppenmetalle liegt dabei bevorzugt im Bereich von 0,6 bis 6 g/l Filterkörper.

In der nachstehenden Tabelle sind Meßergebnisse für die Filterregeneration bei einem 2,0 1 Common Rail Diesel Motor aufgeführt. Die Regeneration des Filters zur Beseitigung von Rußpartikeln erfolgt über eine Nacheinspritzung, bei welcher ein dem Filter vorgeordneter Oxidationskatalysator 7 auf die Zündtemperatur der Rußpartikel aufgeheizt wird. Die Tabelle zeigt die erhaltenen Werte für die Zündtemperaturen für einen Filter ohne katalytische Beschichtung 4 sowie für Filter mit unterschiedlichen katalytischen Beschichtungen 4. Als Filter wird ein Wandflußfilter 1 eingesetzt.

**Tabelle I**

| Beschichtung 50 g/l | Zündtemperatur [°C] |
|---|---|
| Ohne Beschichtung | 585 |
| Pt/CeO₂ | 550 |
| Pt/MnO₂ | 580 |
| Pt/MnO₂/CeO₂ 1:1 | 520 |
| Pt/Calciumoxid | 545 |
| Pt/MnO₂/CeO₂/Calciumoxid 4:4:1 | 470 |

Die Werte für die Zündtemperatur gemäß der Tabelle sind für einen Filter ohne katalytische Beschichtung 4 sowie für Filter mit unterschiedlichen katalytischen Beschichtungen bei einer Konzentration von jeweils 50 g/l Filterkörper ermittelt.

Ohne katalytische Beschichtung 4 liegt die Zündtemperatur bei 585 °C. Mit den katalytischen Beschichtungen 4, welche jeweils Platin als Platingruppenmetall enthalten, wird jeweils eine Senkung der Zündtemperatur erzielt.

Die Verwendung einer Sauerstoff speichernden Substanz im Katalysator ohne Erdalkalimetallverbindung führt nur zu einer geringen Herabsetzung der Zündtemperatur. Dabei wird bei der Verwendung von CeO₂ eine Herabsetzung der Zündtemperatur auf 550 °C und bei der Verwendung von MnO₂ lediglich eine Herabsetzung auf 580 °C erhalten.

Bessere Werte ergeben sich für einen Katalysator mit einer Mischung von CeO₂ und MnO₂ im Verhältnis 1:1. Hier wird eine Zündtemperatur von 520 °C erhalten.

Bei einem Katalysator, der neben Platin Calciumoxid als Erdalkalimetallverbindung enthält, jedoch keine Sauerstoff speichernde Komponente aufweist wird eine Zündtemperatur von 545 °C erhalten.

Bei Einsatz eines erfindungsgemäßen Katalysators, der im vorliegenden Fall neben Platin Calciumoxid als Erdalkaliverbindung sowie MnO₂ und CeO₂ als Sauerstoff speichernde Komponenten enthält ergibt sich eine signifikant erhöhte Herabsetzung der Zündtemperatur. Bei einem Mengenverhältnis der Komponenten MnO₂, CeO₂ und Calciumoxid von 4:4:1 ergibt sich eine Zündtemperatur von 470 °C.

Dies zeigt deutlich den Synergieeffekt der im erfindungsgemäßen Katalysator verwendeten aktiven Substanzen.

Während bei Katalysatoren, die neben Platin nur Sauerstoff speichernde Substanzen oder nur eine Erdalkaliverbindung aufweisen, die Zündtemperatur deutlich oberhalb von 500 °C liegt, wird bei einem erfindungsgemäßen Katalysator mit Platin, Sauerstoff speichernden Substanzen und einer Erdalkaliverbindung eine Herabsetzung der Zündtemperaturen auf Temperaturen deutlich unterhalb von 500 °C erhalten.

## Patentansprüche

1. Katalysator zur Herabsetzung der Zündtemperatur von aus dem Abgas von Dieselmotoren ausgefilterten Rußpartikeln,
**dadurch gekennzeichnet,**
**daß** dieser als aktive Substanzen jeweils mindestens eine Erdalkalimetallverbindung, eine Sauerstoff speichernde Substanz und eines der Platingruppenmetalle Platin, Palladium oder Rhodium enthält.

2. Katalysator nach Anspruch 1,
**dadurch gekennzeichnet,**
**daß** die Sauerstoff speichernden Substanzen von Ceroxid, Cer/Zirkon-Mischoxid, Manganoxid, Eisenoxid, Kupferoxid, Bleioxid, Zinkoxid, Lanthanoxid, Bismutoxid, Nb₂O₅, Ta₂O₅ oder von Mischungen hiervon gebildet sind.

3. Katalysator nach einem der Ansprüche 1 oder 2,
**dadurch gekennzeichnet,**
**daß** die Erdalkalimetallverbindungen von Calciumverbindungen gebildet sind.

4. Katalysator nach Anspruch 3,
**dadurch gekennzeichnet,**
**daß** die Calciumverbindungen von Carbonaten, Oxalaten, Hydroxiden, Carboxylaten, Oxiden oder von Mischungen hiervon gebildet sind.

5. Filter zur Beseitigung von Rußpartikeln aus dem Abgas eines Dieselmotors,
**dadurch gekennzeichnet,**
**daß** dieser zur Senkung der Zündtemperatur der Rußpartikel eine katalytische Beschichtung (4) mit einem Katalysator gemäß einem der Ansprüche 1 bis 4 aufweist.

6. Filter nach Anspruch 5,
**dadurch gekennzeichnet,**
**daß** die Konzentration der katalytischen Beschichtung (4) im Bereich von 20 bis 150 g/l Filterkörper liegt.

7. Filter nach Anspruch 6,
**dadurch gekennzeichnet,**
**daß** die Konzentration des Platingruppenmetalls oder der Platingruppenmetalle im Bereich 0,5 bis 6 g/l Filterkörper liegt.

8. Filter nach einem der Ansprüche 5 bis 7,
**dadurch gekennzeichnet,**
**daß** dieser als Wandflußfilter (1) mit einer Anordnung von Anströmkanälen (2) und Abströmkanälen (3) ausgebildet ist.

9. Filter nach Anspruch 8,
**dadurch gekennzeichnet,**
**daß** dieser aus Siliciumcarbid, Cordierit oder Natriumzirkonphosphat besteht.

10. Filter nach einem der Ansprüche 8 oder 9,
**dadurch gekennzeichnet,**
**daß** die katalytische Beschichtung (4) auf die Innenwände der Anströmkanäle (2) aufgebracht ist.

11. Filter nach Anspruch 10,
**dadurch gekennzeichnet,**
**daß** die katalytische Beschichtung (4) auf die gesamten Oberflächen der Innenwände der Anströmkanäle (2) aufgebracht ist.

12. Verfahren zur Beseitigung von Rußpartikeln aus dem Abgas eines Dieselmotors mittels eines Filters gemäß einem der Ansprüche 5 bis 11, **gekennzeichnet durch** folgende Verfahrensschritte
- Ablagerung von Rußpartikeln aus dem Abgas des Dieselmotors auf dem Filter,
- Regeneration des Filters **durch** Verbrennen der abgelagerten Rußpartikeln bei einer **durch** den Katalysator herabgesetzten Zündtemperatur der abgelagerten Rußpartikel.

13. Verfahren nach Anspruch 12,
**dadurch gekennzeichnet,**
**daß** die Regeneration des Filters in vorgegebenen Zeitintervallen erfolgt.

14. Verfahren nach Anspruch 13,
**dadurch gekennzeichnet,**
**daß** zur Aufheizung des Filters während der Regeneration ein Oxidationskatalysator (7) vorgesehen ist, wobei die bei Oxidationsprozessen im Oxidationskatalysator (7) freigesetzte Wärme zur Aufheizung des Filters und des Abgases verwendet wird.

15. Verfahren nach Anspruch 14,
**dadurch gekennzeichnet,**
**daß** während der Regeneration des Filters dem Oxidationskatalysator (7) Kohlenmonoxid aus dem Abgas zugeführt wird, welches bei einer In-Zylinder-Nacheinspritzung erzeugt wird.
